(19) Europäisches Patentamt
European Patent Office
Office européen des brevets

(11) EP 1 739 207 A2

(12) # EUROPEAN PATENT APPLICATION

(43) Date of publication:
**03.01.2007 Bulletin 2007/01**

(21) Application number: **06076171.5**

(22) Date of filing: **06.06.2006**

(51) Int Cl.:
*C25B 1/30* (2006.01) *D06F 35/00* (2006.01)
*C02F 1/461* (2006.01) *C02F 1/469* (2006.01)
*C11D 3/39* (2006.01) *D06L 3/04* (2006.01)

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **27.06.2005 EP 05076466**

(71) Applicants:
- **UNILEVER N.V.**
**3013 AL Rotterdam (NL)**
Designated Contracting States:
**AT BE BG CH CZ DE DK EE ES FI FR GR HU IS IT LI LT LU LV MC NL PL PT RO SE SI SK TR**
- **UNILEVER PLC**
**London EC4P 4BQ (GB)**
Designated Contracting States:
**CY GB IE**

(72) Inventors:
- **van Kralingen, Cornelis Gerhard**
**3133 AT Vlaardingen (NL)**
- **Poos, Arie Michiel**
**3133 AT Vlaardingen (NL)**
- **Reinhoudt, Hank Robert**
**3133 AT Vlaardingen (NL)**

(74) Representative: **Rosen Jacobson, Frans Lucas M.**
**Unilever Patent Group**
**Olivier van Noortlaan 120**
**3133 AT Vlaardingen (NL)**

(54) **Peroxide generating device and method**

(57) The present invention provides a peroxide generating device for application in an automatic fabric washing machine (9), comprising an electrochemical cell (4) for the production of peroxide from tap water (1) and air, and a pH modifying device (2) for the production of acidic (6) and alkaline (5) water. Thereby enabling washing of the fabric articles without the need for added chemicals and improved fabric care, due to the separate dosing of peroxide.



Printed by Jouve, 75001 PARIS (FR)

## Description

### Field of the invention

The present invention relates to the field of fabric cleaning methods. The invention is concerned with a peroxide generating device for application in connection with automatic washing machines.

### Background of the invention

In recent years one has become increasingly aware of the impact of human activities on the environment and the negative consequences this may have. Ways to reduce, reuse and recycle resources are becoming more important. Fabric cleaning is one of the many household activities with a significant environmental impact. This is partly caused by the use of conventional detergent products, which tend to be relatively complex compositions with a variety of ingredients. Over the years some ingredients have been banned by legislation in certain countries because of their adverse environmental effects. The environmental concern has led to an increasing demand for low environmental impact detergent products.

However, the reduction of ingredients in detergent products should not result in reduced washing efficiency, but rather a more targeted approach to the stains and fabric articles to be cleaned. This could be achieved by diversification of the detergent products which has been the trend for the past years resulting in different detergent products for e.g. coloured fabrics, white fabrics, delicate fabrics, wool, dark fabrics etc, which in turn has resulted in large numbers of bottles of liquid detergent and boxes of detergent tablets or powders in the consumers homes.

An alternative to detergent product diversification is the increase of functionality of washing machines. Today's detergent products comprise builder material to sequester hardness ions from tap water thereby softening the water. The detergent products also comprise bleaching components such as peroxides, peracids, bleach precursors or bleach catalysts. The pH in the washing process is often controlled by buffers, acids or bases that are added to the detergent product.

A troublesome ingredient is the bleach component. Currently detergent products often comprise bleach catalysts or bleach precursors and a peroxide source to form or activate bleach during the washing process. One of the problems to be solved, when making these formulations is to protect degradation sensitive ingredients in the composition (e.g. enzymes and perfumes) from bleach components. One solution to this is to keep the bleach component in another compartment of the detergent package (i.e. bottle) than the sensitive ingredients, as disclosed in WO96/30489. Another solution is the encapsulation of degradation sensitive ingredients, such as disclosed in US 5 066 419 for the encapsulation of perfumes. Another problem is to prevent the bleach to be formed already in the composition thereby causing even more risk of degradation of sensitive ingredients and degradation of the bleach itself as well.

It is known in the art that hydrogen peroxide can be made using an electrolysis unit as disclosed in US-B1-6,387,238.

It is also disclosed in said patent that the peroxide can be made to react with a bleach precursor such as TAED (tetra acetyl ethylene diamine) to form peracetic acid, a well known bleaching component.

US-A-5,703,034 discloses a device for generating hydrogen peroxide. In this document it is disclosed that the feed water for the peroxide generating device is preferred to be alkaline in order to obtain a suitable yield.

As disclosed in US application 2002/0166177A1 a washing machine can be equipped with a peroxide generator. In said application, it is disclosed that the peroxide may act as a bleach alone or together with a bleach catalyst, incorporated in the device.

There are bleach generating systems known in the art wherein hydrogen peroxide is produced by electrolysis, such as the system disclosed in US-A-4,319,973 (Porta et.al.). However, in these systems the peroxide is produced from alkaline aqueous solutions, requiring vast amounts of buffer.

It is an object of the present invention to provide an automatic washing machine comprising a peroxide generating device for the in-situ generation of peroxide, without the need for added chemicals.

A known problem in the art is that the bleaching component, which may for instance be formed from peroxide and a bleach percursor is best formed at high pH, usually above pH 10, whereas the bleaching activity is much better at a pH that is around 8.

Therefore it is a further object of the invention to provide a bleach generating process, wherein the bleach a forming pH and the pH of the washing process can be independently chosen.

It is a further object of the invention to provide a laundering process, wherein a low environmental impact detergent product (as defined herein below) may be used.

We have now surprisingly found that the in-situ generation of peroxide in a washing process, combined with a pH regulating device as disclosed herein, enables the in-situ generation of peroxide in the washing machine and the formation of a bleaching component from peroxide and e.g. a bleach precursor at high pH, while enabling washing of

the fabric at reduced pH, without the need for added chemicals. A further advantage is that because of the improved performance a lower amount of peroxide, bleach precursor or catalyst is required as compared to the levels in today's detergent products. Yet a further advantage is the improved fabric care, due to the separate dosing of peroxide. A further advantage of in situ bleach generation is that it is not required to overdose the detergent product in order to compensate for on shelf degradation, which thereby reduces the burden on the environment.

Definition of the invention

Accordingly, the present invention provides an automatic fabric washing machine comprising a peroxide generating cell comprising an electrochemical cell for the production of peroxide from tap water and air, and being suitable for use in said machine when the machine is in operation; and a pH modifying device comprising an electrochemical cell comprising one or more cathode and anode electrodes for the production of acidic and alkaline water;
whereby no added chemicals are needed when the device is in operation.

In a second aspect, the present invention provides a bleach generating process using the washing machine, wherein a detergent comprising a bleach precursor is added to the washing machine when in operation.

In a third aspect, the present invention provides a laundering process for fabric, wherein the washing machine according to the present invention is used.

These and other aspects, features and advantages will become apparent to those of ordinary skill in the art from a reading of the following detailed description and the appended claims. For the avoidance of doubt, any feature of one aspect of the present invention may be utilised in any other aspect of the invention. It is noted that the examples given in the description below are intended to clarify the invention and are not intended to limit the invention to those examples per se. Similarly, all percentages are weight/weight percentages unless otherwise indicated. Numerical ranges expressed in the format "from x to y" are understood to include x and y. When for a specific feature multiple preferred ranges are described in the format "from x to y", it is understood that all ranges combining the different endpoints are also contemplated.

**Detailed description of the invention**

The peroxide containing water that is obtained from the device of the invention is particularly suitable for use in a fabric washing machine.

In today's fabric cleaning methods, bleaching is usually obtained by the formation of a peracid from bleach precursor and peroxide in the detergent product. Alternatively, bleaching can be obtained by the combination of peroxide and a bleach catalyst, both present in the detergent product.

The term peracid or peracid bleach is defined herein as any peroxy acid as defined by general formula 1.

$$ROOH \qquad (1)$$

A preferred group of peracids is the type of general formula 2.

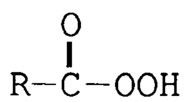

(2)

Another preferred group of peracids is the type of general formula 3.

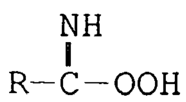

(3)

The corresponding persalts of the peracids of formulas 1, 2 and 3 are also included in the scope of the invention, in particular alkali and alkaline earth metal persalts, preferably sodium and potassium persalts.

The addition of bleaching components to a detergent product has many disadvantages. Firstly, many components in today's detergent products, such as enzymes and perfumes are sensitive to peroxide. The presence of peroxide

leads to degradation of these components, thereby reducing the activity of the detergent product over time. Secondly, peroxides themselves are subject to degradation, thereby requiring a relatively large amount to be present in the detergent product to ensure activity over a reasonable storage time. In this case storage time means, both the time on shelf at the distributors facilities and in the home of the consumer. Another drawback is that a relatively high pH is required to form peracid from a bleach precursor and peroxide. However, at this high pH the bleaching reaction is low, compared to neutral or mildly alkaline conditions.

**Peroxide-cell**

The present invention overcomes these disadvantages by providing a peroxide generating cell to produce peroxide containing water. The peroxide generating cell does not require added chemicals for the production of peroxide.

In order to be effective for washing processes, the peroxide containing water preferably has a peroxide concentration of 0.1 to 15 mmol/l, more preferably 2 to 12 mmol/l, still more preferably 5 to 10 mmol/l when diluted to the eventual washing liquor. The peroxide containing water may be used directly in the washing process, or may be produced in a more concentrated form, stored inside the washing machine and diluted to the intended concentration when required. When produced in a more concentrated form the concentration is preferably between 1 and 500 mmol/l, more preferably between 50 and 200 mmol/l. When the peroxide solution is stored inside the washing machine for a longer period of time, a pH of at or below 7 is preferred, more preferably at or below 6, still more preferably at or below 5, for the purpose of storage stability.

Without wishing to be bound to any particular theory, peroxide is formed in the cell by the reaction of water with oxygen. Oxygen is converted to peroxide or peroxide ions at the cathode, generally as follows:

$$O_2 + 2H^+ + 2e^- \rightarrow H_2O_2$$

at acidic conditions or

$$O_2 + H_2O + 2e^- \rightarrow HO_2^- + OH^-$$

at alkaline conditions.

The peroxide ions react with protons ($H^+$) or water to form hydrogen peroxide. Protons are formed at the anode. The protons are formed by the following reaction:

$$2H_2O \rightarrow O_2 + H^+ + 4e^-$$

The peroxide generation reaction does not require added chemicals, only water and air. The formation of hydrogen ($H_2$) is preferably avoided for safety reasons. When chlorine is present in the feed water, the peroxide generating device may also produce a minor amount of chlorine dioxide. Although chlorine dioxide is also a suitable bleaching agent, it is preferred that the ratio of peroxide : chlorine dioxide is preferably more than 20:1, more preferably more than 100:1.

The peroxide generating cell is preferably an electrochemical cell comprising one or more cathode and anode electrodes that are chargeable by a DC potential. The electrodes may for instance be in the form of plates or rods, preferably plates. The cathode is preferably a gas diffusion electrode. The cathode preferably comprises a catalyst bound to the cathode surface. The cathode may comprise conductive materials such as carbon (e.g. graphite, carbon nano-tubes and other forms of carbon), metals or conductive polymers or combinations thereof. Preferred metal catalysts are transition metals, transition metal oxides or transition metal macrocycles. Preferred transition metals include gold, mercury and oxide covered metals such as nickel and cobalt. Preferred metal oxides include nickel oxide, cobalt oxide and spinels. Preferred transition metal macrocycles include: CoTsPc (phthalocyanine tetra-sulfonate)cobalt) and CoTMPP (tetramethoxyphenyl porphyrine). The Anode is preferably a dimensionally stable anode, which is preferably constructed from conductive materials such as metals, carbon or conductive polymers or combinations thereof.

Some transition metals are not preferred, in particular platinum, platinum alloys, platinum family metals, palladium, and silver. Also not preferred are perovskites and pyrochlores, such as lead ruthenate transition metal oxides, and macrocyclic FeTsPc (iron tetrasulfonato phthalocyanine).

The dimensions and specification of the peroxide generating cell are dependent on the intended use. If the peroxide is stored in a buffer tank inside the washing machine, a slow system producing peroxide e.g. overnight is suitable. However, when the peroxide is to be produced during the washing process, a fast producing system is required. The peroxide generating cell of the present invention preferably comprises a total cathode area of at least 10 $cm^2$, more preferably at least 50 cm2, even more preferably at least 100 cm2 and at most 1000 $cm^2$, more preferably at most 500 $cm^2$, even more preferably at most 400 $cm^2$, still more preferably at most 300 $cm^2$; the area being dependent on the

demanded production rate. The surface area is preferably divided over between 1 and 25, more preferably between 1 and 10 cathode electrodes. The peroxide production rate is typically between 0.1 and 2000 mmol/h. The actual rate is dependent on amongst others the surface area of the cathode and the type of operation. In a system with a peroxide storage tank, a slow production rate is preferred, typically from 0.1 to 200 mmol/hr, while in a system where the peroxide is produced immediately during water intake, the production rate is preferably between 200 and 2000 mmol/hr. The efficiency of this type of peroxide generating cell is preferably from 50 to 100% at or just after the start of the peroxide production, typically from 60 to 95%.

The total surface area of the anodes is between 10 and 100% of the total surface area of the cathodes.

The electrodes are optionally separated by a semi-permeable membrane.

**pH modifier**

As an alternative to buffers, acids and bases, the pH of a fabric washing liquor can be adjusted by the use of an electrochemical pH modifier cell as described in co-pending EP application 05075218.7.

As indicated above, the bleach peracid formation reaction from peroxide and bleach precursor is preferably carried out at high pH, whereas the bleach reaction is more efficient at lower pH. Typically, the pH for the peracid formation reaction is above 9, preferably above 9.5. The pH is preferably at or below 13, more preferably at or below 12, still more preferably at or below 11, ideally at or below 10.5. The bleach reaction on the other hand is preferably carried out at a pH at or below 9.5, more preferably at or below 9, still more preferably at or below 8.5. The pH of the bleach reaction is generally above 7, preferably above 7.5, ideally above 8.

Buffers, salts, acids and bases to adjust the pH of the washing liquor form other bulky ingredients in today's detergent products. Alternatively, the application of a pH modifier enables adjustment of the pH in the washing liquor without added chemicals, which is of great convenience to the consumer.

The pH modifier of the invention is a device that divides a feed water stream in an acidic and an alkaline stream for instance using an electrolysis cell. The pH modifier may be fed with tap water or softened water. Part of the alkaline stream may be used in the bleach formation reaction. Furthermore, part of the acidic and alkaline stream may be used in the washing process. The pH of the acidic water is preferably between 1 and 6, more preferably between 1 and 3. The pH of the alkaline stream is typically between 9 and 13, preferably between 10 and 12. The volume ratio between produced alkaline water and acidic water for the application in the device of the invention is preferably between 1:20 and 20:1, more preferably between 1:10 and 10:1.

The acidic water from the pH modifier may also be used to regenerate the electrochemical cells of the peroxide generation device.

In short, the pH modifier may be used for the production of acidic water and alkaline water. The acidic water may be used for the regeneration of electrochemical cells and for use in the washing process. The alkaline water may be used in the bleach formation reaction and the washing process. This improves the bleach performance and the robustness of the electrochemical cells, reduces the required amount of water for regeneration of the electrochemical cells and does not required the addition of chemicals.

The pH modifier is an electrochemical cell comprising one or more cathode and anode electrodes. The electrodes may for instance be in the form of plates or rods, preferably plates. The plates and the conductive surface on the plates may be constructed from conductive materials such as metals, carbon or conductive polymers or combinations thereof.

The pH modifier preferably has a total production rate of between 1 and 500 1/hr, more preferably between 2 and 300 1/hr of combined alkaline and acidic water.

**Water softening**

In order to be effective for fabric washing processes, e.g. those where no builder is applied, the water hardness in the water that is added to the washing process is preferably less than 5°FH, preferably less than 2°FH and more preferably less than 1°FH. The reduction of the water hardness is desirable in order to prevent the deposition of calcium soaps in the soil, to prevent the precipitation of anionic surfactants, to maximise colloid stability and to reduce the calcium - soil - substrate interaction and soil - soil interaction and hence to improve soil removal.

A further advantage of the softened water produced using the water softening device of the invention is that hydrogen peroxide is more stable in softened water than in e.g. tap water.

Most common detergent products comprise builder material to sequester hardness ions from tap water. Builder material is usually present in the detergent composition in a concentration of 15 to 80%. Commonly known builders are water soluble phosphate salts, such as sodium tripolyphosphate (stpp) or zeolites. Phosphates are assumed to cause eutrophication of surface water, and zeolites cause insoluble matter in household waste streams. Due to the nature of builder material and the amount in which it is present, it has become more and more objected to in detergent products, especially laundry detergent products.

As an alternative to the use of builder material, different water softening devices are known in the art. These devices all produce soft water by sequestering hardness-ions like $Ca^{2+}$ and $Mg^{2+}$ from tap water, for instance by ion-exchange. In WO-01/30229, a system is described, which utilises a built-in ion-exchange system to remove calcium and magnesium ions from the water supply. However, the ion-exchange material requires regular regeneration. For application in a common type of automatic washing machine, vast amounts of e.g. salt solution would be required for the regeneration of the ion-exchanger, thereby undoing the effect of the reduction of builder chemicals in the detergent. Further disadvantages of ion-exchange are the limited life-time of the ion-exchange resin and/or the required volume of resin for the production of the amount of soft water required in a washing machine.

Another water softening method is electronic deionisation (EDI), which combines ion exchange and electrodialysis, as described in co-pending application EP 04076353.4. Although this method does not require regeneration chemicals, the other disadvantages relating to the use of the ion-exchange resin remain as indicated above. Furthermore, EDI is a complicated technology, that is difficult to operate in a robust manner over a long time period, as required in house-hold appliances

Yet another water softening method is capacitive deionisation, using a flow through capacitor (FTC) as amongst others disclosed in co-pending application EP 05075218.7. Said method comprises the use of an electrically regenerable electrochemical cell for capacitive deionization and electrochemical purification and regeneration of the electrodes including two end plates, one at each end of the cell. By polarising the cell, ions are removed from the electrolyte and are held in the electric double layers at the electrodes. The cell can be (partially) regenerated electrically to desorb such previously removed ions. The regeneration could be carried out without added chemical substances.

The flow through capacitor (FTC) comprises plates having a conductive surface. The plates are chargeable in response to an applied DC potential. The plates are separated from each other by non-conductive spacers. The plates and the conductive surface on the plates may be constructed from conductive materials such as metals, carbon or conductive polymers or combinations thereof, as also described in WO01/66217 or WO02/86195, by Andelman.

The peroxide generating device of the present invention may comprise a water softening device. This device is preferably based on ion exchange, electronic deionisation or capacitive deionisation, more preferably the device is based on capacitive deionisation using a flow through capacitor.

**Regeneration of electrolysis cells**

All three electrochemical cells as described above (i.e. the peroxide-cell, the pH modifier and the water softener) are subject to cell fouling, wherein cell-fouling comprises all depositions on the cell surface, including but not limited to, calcium deposits, copper film and bio-fouling.

For long lasting robust operation of electrochemical cells, it is desirable to be able to regenerate said cells, thereby removing the fouling as defined above. By changing the polarity of the electrodes when the cell is suitable, or short-circuiting said electrodes, the cell may release deposited ions, such as hardness ions and other depositions. In addition, electrochemically active ions that may be present in tap water (such as copper), do not absorb electrostatically to the carbon, but tend to plate out on the carbon. Even though the concentration of such ions in tap water will generally be low, the build-up over time may cause problems for the performance of the technology. Especially in in-home washing machines, which on average last about 10 years, long lasting robust operation is required by the consumer. In view of the above, the efficiency of the regeneration may be improved by regenerating with water with low pH. The pH of the feed water may be reduced by the addition of acid, but preferably the acidic water from the pH modifier is used to regenerate the three electrochemical cells of the peroxide generation device of the invention.

**The cleaning method**

In the cleaning method of the invention, the peroxide containing water may be mixed with a low environmental impact detergent product (LEIP) and used for treating substrates to be cleaned. Said cleaning method is preferably carried out in a fabric washing machine.

<u>Bleaching System</u>

Although hydrogen peroxide ($H_2O_2$) is a good bleach, it only gives a slow oxidation process due to slow kinetics and thereby a slow bleaching process. For fabric washing methods it is preferred to have a stronger oxidant that is active at low temperatures and concentration.

Commonly known methods to improve bleaching are the use of a bleaching catalyst to improve the activity of peroxide, and/or the use of a peracid instead of peroxide; said peracid is preferably formed in situ from hydrogen peroxide and a bleach precursor.

A bleach generating process may take place either in the washing machine drum or in an in-line or off-line

mixing device. When a mixing device is used, the mixing device is selected from the group consisting of a static mixer, dynamic mixer, stirred tank or storage tank or a combination thereof.

*Bleach precursor*

Peracid may be added to a detergent product, but it is preferably formed in-situ from peroxide and a bleach precursor. A peracid may be formed by perhydrolysis of an acidic bleach precursor by the following reaction:

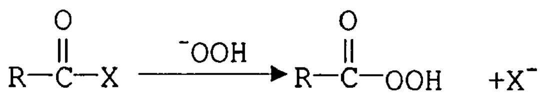


Different types of precursors, such as e.g. cationic nitriles, have different reaction equations, but are also included in the scope of the present invention.

The LEIP composition used in the method of the present invention may include one or more bleach precursors.

The most preferred are precursors selected form the group consisting of: sodium nonanoyloxybenzene sulphonate (SNOBS); nonanoyloxy aminocaproyloxy benzene sulphonate (NACOBS); sodium-4-benzoyloxy benzene sulphonate (SBOBS); N,N,N'N'-tetraacetyl ethylene diamine (TAED); sodium-1-methyl-2-benzoyloxy benzene-4-sulphonate; sodium-4-methyl-3-benzoloxy benzoate; 2-(N,N,N-trimethyl ammonium)ethyl sodium-4-sulphophenyl carbonate chloride (SPCC); trimethyl ammonium toluyloxy-benzene sulphonate; sodium 3,5,5-trimethyl hexanoyl-oxybenzene sulphonate (STHOBS); and substituted cationic nitriles; and mixtures thereof.

Further peracid bleach precursors are known and amply described in literature, such as in the GB-A-0,836,988; GB-A-0,864,798; GB-A-0,907,356; GB-A-1,003,310 and GB-A-1,519,351; DE-A-3,337,921; EP-A-0, 185,522; EP-A-0,174,132; EP-A-0,120,591; and US-A-1,246,339; US-A-3,332, 882; US-A-4,128,494; US-A-4,412, 934 and US-A-4,675,393; and cationic i.e. quaternary ammonium substituted peroxyacid precursors are disclosed in US-A-4, 751,015 and US-A-4,397,757, in EP-A-0,284,292 and EP-A-0,331,229.

The peracid forming reaction of peroxide and bleach precursor from the detergent may be obtained in the washing liquor inside the washing machine drum, or in an off-line mixing vessel. An advantage of the latter is that the peracid may be formed in a concentrated form at the desired pH and may be diluted with acidic water into the washing machine drum, thereby reducing the pH for the washing process resulting in better bleaching activity.

The low environmental impact detergent product (LEIP) of the present invention preferably comprises bleach precursor in a peroxide : precursor ratio of between 1:2 and 25:1, more preferably between 2:1 and 10:1 on a molar basis.

*Bleach catalyst*

Another way to improve the bleaching performance of hydrogen peroxide, to enable the use of lower temperatures and/or to use less peroxide is the use of a bleach catalyst.

A bleach catalyst is defined herein as any substance improving the activity of peroxide by the reduction of the activation energy for the bleaching reaction, while not taking part (i.e. being consumed) in the reaction.
The use of bleaching catalysts for stain removal has been developed over recent years and may be used in the present invention. Examples of transition metal catalysts that may be used are found, for example, in: WO-01/48298, WO-00/60045, WO-02/48301, WO-00/29537 and WO-00/12667. The catalyst may alternatively be provided as the free ligand that forms a complex in situ with transition metals present in the water. In general, the catalyst contains an at least partially covalently bonded transition metal, and bonded thereto at least one ligand.

In general, transition-metal bleach catalysts herein comprise a transition metal selected from the group consisting of Mn(II), Mn(III), Mn(IV), Mn(V), Fe(II), Fe(III), Fe(IV), Co(I), Co(II), Co(III), Ni(I), Ni(II), Ni(III), Cu(I), Cu(II), Cu (III), Cr(II), Cr(III), Cr(IV), Cr(V), Cr(VI), V(III), V(IV), V(V), Mo(IV), Mo(V), Mo(VI), W(IV), W(V), W(VI), Pd(II), Ru(II), Ru (III), and Ru(IV). Preferred transition-metals in the instant transition-metal bleach catalyst include manganese, iron and copper, preferably Mn(II), Mn(III), Mn(IV), Fe(II), Fe(III), Cu(I), Cu(II), Cu(III).

In general, as used herein, a "ligand" is any moiety capable of direct covalent bonding to a metal ion. Ligands can be charged or neutral. The ligands may include simple monovalent donors, such as chloride, or simple amines which form a single co-ordinate bond and a single point of attachment to a metal; to oxygen or ethylene, which can form a three- membered ring with a metal and thus can be said to have two potential points of attachment, to larger moieties such as ethylenediamine or aza macrocycles, which form up to the maximum number of single bonds to one or more

metals that are allowed by the available sites on the metal and the number of lone pairs or alternate bonding sites of the free ligand. Numerous ligands can form bonds other than simple donor bonds, and can have multiple points of attachment.

The low environmental impact detergent product (LEIP) of the present invention preferably comprises bleach catalyst in a peroxide : catalyst ratio of between 100:1 and 100.000:1 more preferably between 500:1 and 5000:1 on a molar basis.

Builders

It is estimated that the majority of laundry detergent products sold in most parts of the world are conventional granular detergent products. These typically comprise more than 15 %wt of a builder. Builders are added to improve the detergency but builders such as phosphate are renowned for their effect on eutrophication. To overcome this problem in many countries - in particular those where phosphates are banned - zeolites have become the accepted industry standard. The LEIP used according to the invention is substantially builder-free. Substantially builder-free for the purpose of the present invention means that the LEIP comprises at most 5 % of builder by weight of the total LEIP composition. Preferably, the LEIP comprises at most 3 %, more preferably at most 1 %, most preferably 0 % by weight of builder based on the total LEIP composition.

Builder materials are for example 1) calcium sequestrant materials, 2) calcium precipitating materials, 3) calcium ion-exchange materials and 4) mixtures thereof.

Examples of calcium sequestrant builder materials include alkali metal polyphosphates, such as sodium tripolyphosphate; nitrilotriacetic acid and its watersoluble salts; the alkali metal salts of carboxymethyloxy succinic acid, ethylene diamine tetraacetic acid, oxydisuccinic acid, mellitic acid, benzene polycarboxylic acids, citric acid; and polyacetal carboxylates as disclosed in US Patents 4,144,226 and 4,146,495 and di-picolinic acid and its salts. Examples of precipitating builder materials include sodium orthophosphate and sodium carbonate.

Examples of calcium ion-exchange builder materials include the various types of water-insoluble crystalline or amorphous aluminosilicates, of which zeolites are the best known representatives, e.g. zeolite A, zeolite B (also know as Zeolite P), zeolite Q, zeolite X, zeolite Y and also the zeolite P type as described in EP-A-0384070. In addition polymeric builders like poly-acrylates and poly-maleates. Although soaps may have a builder function for the purpose of the present invention soaps are not considered to be builders but instead surfactants.

Surfactants

The LEIP used in the laudering process of the invention comprises at least 10 wt.%, preferably at least 25 wt. % more preferably at least 40 wt.% of a surfactant. For most cases, any surfactant known in the art may be used. The surfactant may comprise one or more anionic, cationic, nonionic, amphoteric and zwitterionic surfactant and mixtures thereof. Further examples are given in "Surface Active Agents and Detergents" (Vol. I and II by Schwartz, Perry and Berch). A variety of such surfactants are also generally disclosed in US-A-3,929,678.

pH modifying chemicals

Another major ingredient in conventional granular detergent products are pH modifying chemicals. For the purpose of the present invention the term pH modifying chemicals is meant to describe ingredients that effect the pH either by increasing, decreasing or maintaining the pH at a certain level. Typical examples include, but are not limited to, salts like acetates, borates, carbonates, (di) silicates, acids like boric acid, phosphoric acid, sulphuric acid, organic acids like citric acid, inorganic bases and organic bases.

In conventional detergent products builder and pH modifying chemicals may account up to 70 wt.% of the composition. It is to be noted that for the purpose of the present invention surfactants - even though some surfactants may have some pH effect - are not considered to be a pH modifying chemical.

The LEIP according to one preferred embodiment of the invention is substantially free of pH modifying chemicals. Substantially free of pH modifying chemicals is meant to describe products comprising at most 5 wt.% of pH modifying chemicals. Preferably the LEIP comprises 0 to 3 wt.%, more preferably 0 to 1 wt.%, most preferably 0 wt.% of pH modifying chemicals by weight of the total LEIP composition.

Neutralisers for liquid detergent products

Conventional liquid detergents products often contain acidic components, e.g. anionic surfactants such as LAS (linear alkylbenzene sulphonate). To neutralize these acids, the composition may optionally comprise neutralisers. These neutralisers are preferably organic or inorganic bases. The bases are preferably selected from the group consisting of

NaOH, KOH, mono-ethanol amine (MEA) and tri-ethanol amine (TEA). The neutralisers are present in a concentration of 50 %mol to 200 %mol of the molar concentration of the components that require neutralisation.

Enzymes

Enzymes constitute a preferred component of the LEIP. The selection of enzymes is left to the formulator. However, the examples herein below illustrate the use of enzymes in the LEIP compositions according to the present invention. "Detersive enzyme", as used herein, means any enzyme having a cleaning, stain removing or otherwise beneficial effect in a LEIP. Preferred enzymes for the present invention include, but are not limited to, inter alia proteases, cellulases, lipases, amylases and peroxidases.

Enzyme Stabilizing System

The LEIP herein may comprise an enzyme stabilising system, preferably from about 0.001% to about 10% by weight of the LEIP. One embodiment comprises from about 0.005% to about 4% by weight of the LEIP of said stabilising system, while another aspect includes the range from about 0.01% to about 3% by weight of the LEIP of an enzyme stabilising system. The enzyme stabilising system can be any stabilising system which is compatible with the detersive enzyme. Stabilising systems can, for example, comprise calcium ion, boric acid, propylene glycol, short chain carboxylic acids, boronic acids, and mixtures thereof, and are designed to address different stabilisation problems depending on the type and physical form of the detergent composition.

Optional cleaning agents

The LEIP may contain one or more optional cleaning agents, which include any agent suitable for enhancing the cleaning, appearance, condition and/or garment care. Generally, the optional cleaning agent may be present in the compositions of the invention in an amount of 0 to 20 wt.%, preferably 0.001 wt.% to 10 wt.%, more preferably 0.01 wt.% to 5 wt.% by weight of the total LEIP composition.

Some suitable optional cleaning agents include, but are not limited to antibacterial agents, colorants, perfumes, pro-perfumes, finishing aids, lime soap dispersants, composition malodour control agents, odour neutralisers, polymeric dye transfer inhibiting agents, crystal growth inhibitors, anti-tarnishing agents, anti-microbial agents, anti-oxidants, anti-redeposition agents, soil release polymers, thickeners, abrasives, corrosion inhibitors, suds stabilising polymers, process aids, fabric softening agents, optical brighteners, hydrotropes, suds or foam suppressors, suds or foam boosters, anti-static agents, dye fixatives, dye abrasion inhibitors, wrinkle reduction agents, wrinkle resistance agents, soil repellency agents, sunscreen agents, anti-fade agents, and mixtures thereof.

Product format

The LEIP may be dosed in any suitable format such as a liquid, gel, paste, tablet or sachet. In some cases granular formulations may be used although this is not preferred. In one preferred embodiment the LEIP is a non-aqueous product. Non-aqueous for the purpose of the present invention is meant to describe a product comprising less than 10 %, preferably less than 5 %, more preferably less than 3 % by weight of free water. The non-aqueous product may be a liquid, gel or paste or encapsulated in a sachet.

It is desirable to equip washing machines with one or more detergent product containers so that the detergent product may be dosed automatically. The LEIP may be dosed from a single container. Alternatively, the ingredients making up the LEIP may be dosed from separate containers as described in EP-A-0419036. Thus in one preferred embodiment at least one ingredient from the LEIP is dosed automatically. One advantage of a LEIP may be that the reduced number and/or amount of ingredients enables a much smaller volume of detergent product. In practice this would mean that the consumer does not need to refill the containers as often or that the containers may be smaller, therefore making an automatic dosage system more feasible when using the device of the invention. When an automatic dosage system is applied, it is preferred that the bleach precursor or activator (catalyst) is stored separately from the other components of the detergent product.

**Description of the figures**

Figure 1 shows a flow diagram of a preferred embodiment of the device of the invention and figure 2 shows the working of an electrolysis cell as $H_2O_2$ generating device. In figure 1, tap water (1) from the main is fed to the pH-modifier cell (2), where the water is separated into acidic and alkaline water. The acidic water is stored in a storage vessel (6) and the alkaline water in storage vessel (5). The alkaline water from vessel (5) is fed into the peroxide generating cell (4). The peroxide containing water of high pH is then fed to a bleach generation vessel (7), where the peroxide is reacted with the bleach precursor (8a) to form peracid. The solution containing peracid is subsequently fed to the washing machine (9) from bleach generation vessel (7). Part of the alkaline and/or acidic water from respective vessels (5) and (6) may be added directly to the washing machine (9). The remaining detergent components (8b) from the detergent product are fed to the washing machine directly. Alternatively the tap water from the main may first be fed into a water softener FTC-cell (3). The softened water is then fed into the pH modifier cell (2) and processed as explained above. Regeneration waste water (dotted streams) from all electrochemical cells is drained (10) as well as the washing machine waste water. The cells are e.g. regenerated with acidic water from vessel (6); these streams are not shown in the drawings to maintain clarity.

Figure 2 shows the peroxide generating cell (4). Figure 2a shows the cell from the outside, and figure 2b shows the working of the components in an exploded view of the cell. The cell (4) comprises a gas diffusion cathode (17) and a dimensionally stable anode (19) separated by a membrane (18), which together form a chamber. The reactants, i.e. oxygen from air is brought into the chamber through inlet (11) and the air can leave the chamber from outlet (12) when the device is in operation. Catholyte, i.e. water, is fed through inlet (13) and peroxide containing water is removed from outlet (14) when the device is in operation, thereby producing peroxide. Similarly, the anolyte is fed and removed from ports (15) and (16); when the device is in operation water is fed to the cell and water dissolved protons are withdrawn from the anode.

The invention will now be illustrated by way of the following non-limiting examples, in which all parts and percentages are by weight unless otherwise indicated.

## Examples

In example 1 and comparative example A, the bleach activity and bleach damage of a detergent powder with included peroxide source in the powder is compared with detergent powder not including a peroxide source but whereby a peroxide source is pre-dissolved in the washing water.

In examples 2, 3 and 4 and comparative example B, the bleach performance of in-situ formed peracid is compared to peracid included in washing powder; also the influence of pH on bleach performance is shown.

In example 5 and comparative example C, the improved storage stability of a peroxide solution in softened water is shown.

In example 6 the production of peroxide from softened alkaline water is demonstrated.

## Example 1 and comparative example A

In example 1 and comparative example A, 3 kg of cotton terry towels was washed in a Siemens IQ 1430 automatic front loader washing machine. The load was washed at a temperature of 40°C using the 'wool program' on the washing machine.

The compositions of the washing powders to be used in this example are given in Table 1.

Table 1: Compositions

| Component | Composition 1 | Composition A |
|---|---|---|
| LAS[1)] (g) | 8.4 | 8.4 |
| NI[2)] (g) | 6.6 | 6.6 |
| Soap (g) | 1.0 | 1.0 |
| Zeolite (g) | 19.7 | 19.7 |
| Carbonate (g) | 18.6 | 18.6 |
| Sulphate (g) | 22.4 | 22.4 |
| TAED[3)] (g) | 3.2 | 3.2 |
| Percarbonate[3)] (g) | | 13.0 |
| Minors (g) | 17.1 | 17.1 |

(continued)

| Component | Composition 1 | Composition A |
|---|---|---|
| Total (g) | 97.0 | 110.0 |
| 1) LAS is Linear alkylbenzene sulphonate.<br>2) NI is branched chain non-ionic surfactant 5-7EO.<br>3) Percarbonate is used as a hydrogen peroxide source. | | |

In Example 1, Composition 1 is used, in comparative example A, composition A is used. In example 1, 13 g of percarbonate is dissolved in 500 ml of tap water and added to the dispenser of the washing machine during the first water intake.

Compositions 1 and A were independently put in a sulphur green cotton sachet. Sulphur green is a bleach sensitive colour and know in the art as an indicator for bleach damage.

The Bleach damage was determined using the CIE-Lab method, a well known method in the art. The bleach damage is determined using a total colour measurement by the CIE-lab method in an X-Rite 968 reflectometer. In the reflectometer, light is directed at the surface of the sample at a defined angle and the reflected light is measured photoelectrically. The X-rite translates the measurement to CIE-Lab values, i.e. 'L*', 'a*' and 'b*', where 'a*' and 'b*' define colour and 'L*' defines brightness. Black is defined as L*=0 and white is defined as L*=100, positive values for 'a*' determine red colour, negative values for 'a*' determine green colour and positive values for 'b*' determine yellow colour, negative values for 'b*' determine blue colour.

The 'L*', 'a*' and 'b*' values of the sulphur green sachet in the example were measured before and after washing. The difference between the values are defined as ΔL, Δa and Δb. The bleach damage can be calculated as the total colour difference, ΔE, which is calculated by the formula below.

$$\Delta E = \sqrt{\Delta L^{*2} + \Delta a^{*2} + \Delta b^{*2}}$$

A higher value for ΔE indicates a larger total colour difference between the sulphur green sachet before and after washing, and therefore more bleach damage to said sachet.

The results of the examples are given in Table 2 below.

Table 2: Bleach damage results

| | Example 1 | Comparative example A |
|---|---|---|
| Bleach damage (ΔE) | 2.0 | 13.8 |

These results clearly show that the bleach damage of the example, wherein the peroxide source was in the washing water and the bleach precursor was in the washing powder, is much lower than the comparative example wherein the peroxide source was also included in the washing powder.

**Examples 2, 3 and 4 and comparative example B**

In these examples, a standard commercially available powder detergent formulation comprising amongst others a peroxide source (hydrogen peroxide) and the SNOBS bleach precursor is compared to a detergent formulation comprising only SNOBS bleach precursor, a minor amount of sequestrant and hydrogen peroxide. The tests of the examples are carried out in a 2 L glass beaker at 50°C.

Three commercially available stain test cloths were added to the washing solution.

BC-1 Tea stain on cotton
M027 tomato ketchup/olive oil stain on cotton
M036 spaghetti sauce stain on cotton

These test materials can be obtained from amongst others Center for Test Materials (cft) BV, Vlaardingen, The Netherlands.

In comparative example B, a standard washing powder is used containing SNOBS bleach precursor. The specifications of the washing powder are summarised in Table 3 below.

Table 3: Compositions

| Composition | B | 2 | 3 | 4 |
|---|---|---|---|---|
| LAS (g) | 1.30 | | | |
| NI (g) | 1.02 | | | |
| Soap (g) | 0.16 | | | |
| Zeolite (g) | 3.05 | | | |
| Carbonate (g) | 2.87 | | | |
| Sulphate (g) | 3.47 | | | |
| SNOBS (g) | 0.40 | 0.40 | 0.40 | 0.40 |
| $H_2O_2$ (g)[1)] | 0.57 | 0.57 | 0.57 | 0.57 |
| Sequestrant (g) | 0.18 | 0.18 | 0.18 | 0.18 |
| Minors (g) | 0.94 | | | |
| **Total (g)** | **13.96** | **1.16** | **1.16** | **1.16** |
| 1) $H_2O_2$ is added as stock 36.5% solution (0.57 g = 1.6 ml stock solution). | | | | |

The formulations are dissolved in 2 L of water. In examples 2, 3 and 4, a dissolved detergent formulation is prepared comprising only peroxide, SNOBS bleach precursor and some sequestrant. The sequestrant is added to inactivate metal ions, mainly transition metal ions (from e.g. water piping, the washing machine, dyes and or stains), which have a negative effect on amongst others the bleach stability and stain removal. As there is no builder present in the compositions of examples 2, 3 and 4, softened water is used (1.0 °fH).

In example 2, the pH is set to 8 with NaOH, in example 3, the pH is set to 10 with NaOH and in example 4, the pH is first set to 10 with NaOH and after 2 minutes reduced to pH=8 with HCl. It is noted that the peracid is best formed at a pH of about 10 and has the best performance at a pH of about 8.

In comparative example B a standard detergent powder is used, comprising amongst others surfactants, builder, sequestrant, a peroxide source and a bleach precursor (SNOBS). As the standard powder comprises builder, regular tap water (16.5 °fH) is used in comparative example B.

The stain removal performance (extent of cleaning) was measured with a X-Rite 968 reflectometer. In the reflectometer, light is directed at the surface of the sample at a defined angle and the reflected light is measured photoelectrically. The reflected light is expressed as a percentage (%R), measured at 460 nm. The cleaning result is expressed as the difference in reflectance at 460 nm ($\Delta R = \%R_{cleaned} - \%R_{soiled}$). The results of the experiments are shown in Table 4 below.

Table 4: Results bleach performance

| | B | 2 | 3 | 4 |
|---|---|---|---|---|
| BC-1 | 18.0 | 12.4 | 11.1 | 18.1 |
| M027 | 28.9 | 19.9 | 25.6 | 29.2 |
| M036 | 35.4 | 30.8 | 25.8 | 48.5 |

As can be seen from the table above, the performance of the compositions of examples 2, 3 and 4 are comparable to the standard washing powder of example B, even without the presence of surfactant in the compositions. It can also be seen that the performance of example 2, carried out at pH 8, and example 3, carried out at pH 10, are slightly inferior to the performance of the composition of example 4. This is due to the fact that in example 2, the peracid forming reaction is very slow, while the activity of the peracid is relatively high, due to the low pH; in example 3, the peracid forming reaction is high, while the activity of the peracid is relatively low, due to the high pH; and in example 4, the peracid is

forming is high due to the high pH in the first 2 minutes, and the peracid acivity is high too, due to the pH reduction after 2 minutes.

**Example 5 and comparative example C**

In this example and comparative example the stability of hydrogen peroxide dissolved in tap water (16.5 °fH) is compared to the stability of hydrogen peroxide in softened water (0.2 °fH), produced in a commercially available Flow Through Capacitor (Electronic Water Purifier (EWP), by Sabrex, Inc., San Antonio, TX, USA). The examples are carried out in a 2 L glass beaker at 25 °C. Samples are taken at different intervals and the hydrogen peroxide concentration is measured by titration.

The results are shown in Table 5 below.

Table 5: Results

| Time (h) | Example 5 (mmol/l) | Comparative example C (mmol/l) |
|---|---|---|
| 0.0333 | 74.9 | 78 |
| 0.750 | 74.5 | 77.2 |
| 2.17 | 73.9 | 75.9 |
| 4.27 | 72.6 | 73.2 |
| 6.22 | 70.7 | 72.8 |
| 120 | 36.1 | 11.8 |

As the results in Table 5 show, the peroxide degradation is significantly lower when dissolving peroxide in softened water than when dissolving peroxide in tap water; in fact after 120 hours (5 days) the peroxide concentration is three times as high in the softened water than in tap water.

**Example 6**

In this example the production of peroxide from softened alkaline water is demonstrated.

The equipment as used in this example is a commercially available universal acrylic gas diffusion electrode test cell (ex Rosecreek Technologies Inc., Canada) with a Group E (carbon cloth, black pearls 2000) gas diffusion electrode of 25 $cm^2$.

The used feed water is 1 litre of de-ionised water with a caustic soda (NaOH) concentration of 0.6 g/l and a starting pH of 12.2. This water is held in a recirculation vessel and is constantly circulated through the cell at a rate of 44 ml/min. The cell is further continuously fed with an airflow of 2.1 l/min. The cell current is 1.5 Amps at an electric potential of 30 V.

The pH is monitored during operation and the peroxide concentration (c) is measured by titration of off-line samples taken from the recirculation vessel.

The production rate R (mmol/hr) is calculated by the formula:

$$R = c*V/t,$$

wherein c (mmol/l) is the peroxide concentration, V (1) is the starting volume of the feed water and t (hr) is the time elapsed.

The results are given in Table 6.

Table 6: Results

| Time (min) | c (mmol $H_2O_2$/l) | R (mmol $H_2O_2$/hr) |
|---|---|---|
| 0 | 0 | |
| 15 | 4.23 | 16.91 |
| 33 | 9 | 16.36 |

(continued)

| Time (min) | c (mmol $H_2O_2$/l) | R (mmol $H_2O_2$/hr) |
|---|---|---|
| 50 | 11.12 | 13.35 |
| 77 | 14.38 | 11.21 |
| 108 | 16.29 | 9.05 |

The results in the table above clearly show that the peroxide generating device of the invention can be used to produce peroxide containing water for a machine washing process. When compared to the peroxide concentration of today's commercially available detergent products, which normally contain between 5 and 15 mmol peroxide per litre, it is shown that the device of the present invention can be used for the instant production of peroxide during the washing machine program or when using more time, can be used for the production of higher concentrated peroxide solutions for intermediate storage.

## Claims

**1.** An automatic fabric washing machine comprising:

(a) A peroxide generating cell comprising an electrochemical cell for the production of peroxide from tap water and air, and being suitable for use in said machine when the machine is in operation; and
(b) a pH modifying device comprising an electrochemical cell comprising one or more cathode and anode electrodes for the production of acidic and alkaline water;

whereby no added chemicals are needed when the device is in operation.

**2.** A washing machine according to claim 1, wherein the electro-chemical cell, comprising an anode and a cathode made of carbon, conductive polymer, metal, alloys or combinations thereof.

**3.** A washing machine according to any of claims 1 to 2, wherein the pH modifying device can be fed with tap water or softened water, and is able to split this water in an alkaline and an acidic water stream.

**4.** A bleach generating process using the washing machine of any one of claims 1 to 3, wherein a detergent composition comprising a bleach precursor is added to the washing machine when in operation.

**5.** A bleach generating process according to claim 4, comprising the steps of:

(a) using at least part of the alkaline water stream from the pH modifying device for the generation of peracid bleach out of the peroxide and the bleach precursor, thereby increasing the pH of the washing liquor to between 9 and 13; and
(b) using at least part of the acidic water stream from the pH modifying device in the washing machine, thereby lowering the pH of the washing liquor of the washing process carried out therein, thereby lowering the pH to between 7 and 9;

**6.** A bleach generating process according to claim 5, wherein the generation of peracid bleach takes place either in the washing machine drum or in an in-line or off-line mixing device.

**7.** A bleach generating process according to claim 6, wherein the mixing device for generating the peracid is selected from the group consisting of a static mixer, dynamic mixer, stirred tank or storage tank or a combination thereof.

**8.** A bleach generating process according to claim 4 or 5, wherein the bleach precursor is selected from the group consisting of sodium nonanoyloxybenzene sulphonate (SNOBS); nonanoyloxy aminocaproyloxy benzene sulphonate (NACOBS); sodium-4-benzoyloxy benzene sulphonate (SBOBS); N,N,N'N'-tetraacetyl ethylene diamine (TAED); sodium-1-methyl-2-benzoyloxy benzene-4-sulphonate; sodium-4-methyl-3-benzoloxy benzoate; 2-(N,N, N-trimethyl ammonium)ethyl sodium-4-sulphophenyl carbonate chloride (SPCC); trimethyl ammonium toluyloxy-benzene sulphonate; sodium 3,5,5-trimethyl hexanoyl-oxybenzene sulphonate (STHOBS); and substituted cationic

nitriles; and mixtures thereof.

**9.** A bleach generating process using the washing machine of any one of claims 1 to 3, wherein a detergent composition comprising a bleach catalyst is used.

**10.** A bleach generating process according to claim 9, wherein at least part of the alkaline water stream from the pH modifier is used for adjusting the pH of the washing liquor.

**11.** A process according to any of claims 4 to 10, wherein part of the acidic water stream is used in a pre-washing process.

**12.** A washing machine according to any of claims 1 to 3, wherein the washing machine further comprises a water softening device for the production of softened water from tap water, said softened water having less than 5° FH, whereby no added substances are used.

**13.** A washing machine according to claim 12, wherein the water softening device comprises a flow-through capacitor comprising:

(a) 'n' plates comprising a conductive surface and chargeable in response to an applied DC potential, and
(b) 'n-1' non-conductive spacers to separate said plates from each other,

wherein n is a positive integer, n being at least 2.

**14.** A bleach generating process using washing machine of claims 12 or 13, wherein the peroxide generating device is fed with softened water produced in the water softening device.

**15.** A bleach generating process using washing machine of claims 12 or 13, wherein the pH modifier is fed with softened water produced in the water softening device.

**16.** A laundering process for the cleaning of fabric articles wherein the washing machine according to any of claims 1 to 3 and 12 to 13 and the bleach generating process of claim 5 is used, **characterised in that** the pH of the bleach activating step (a) of the process of claim 5 and the pH of the washing process step (b) of said process are independently chosen.

**17.** A laundering process according to claim 16, wherein a low environmental impact detergent product (LEIP) is used.

**18.** A laundering process according to claim 16 or 17, wherein a dosing system is applied for automatically dosing the detergent composition.

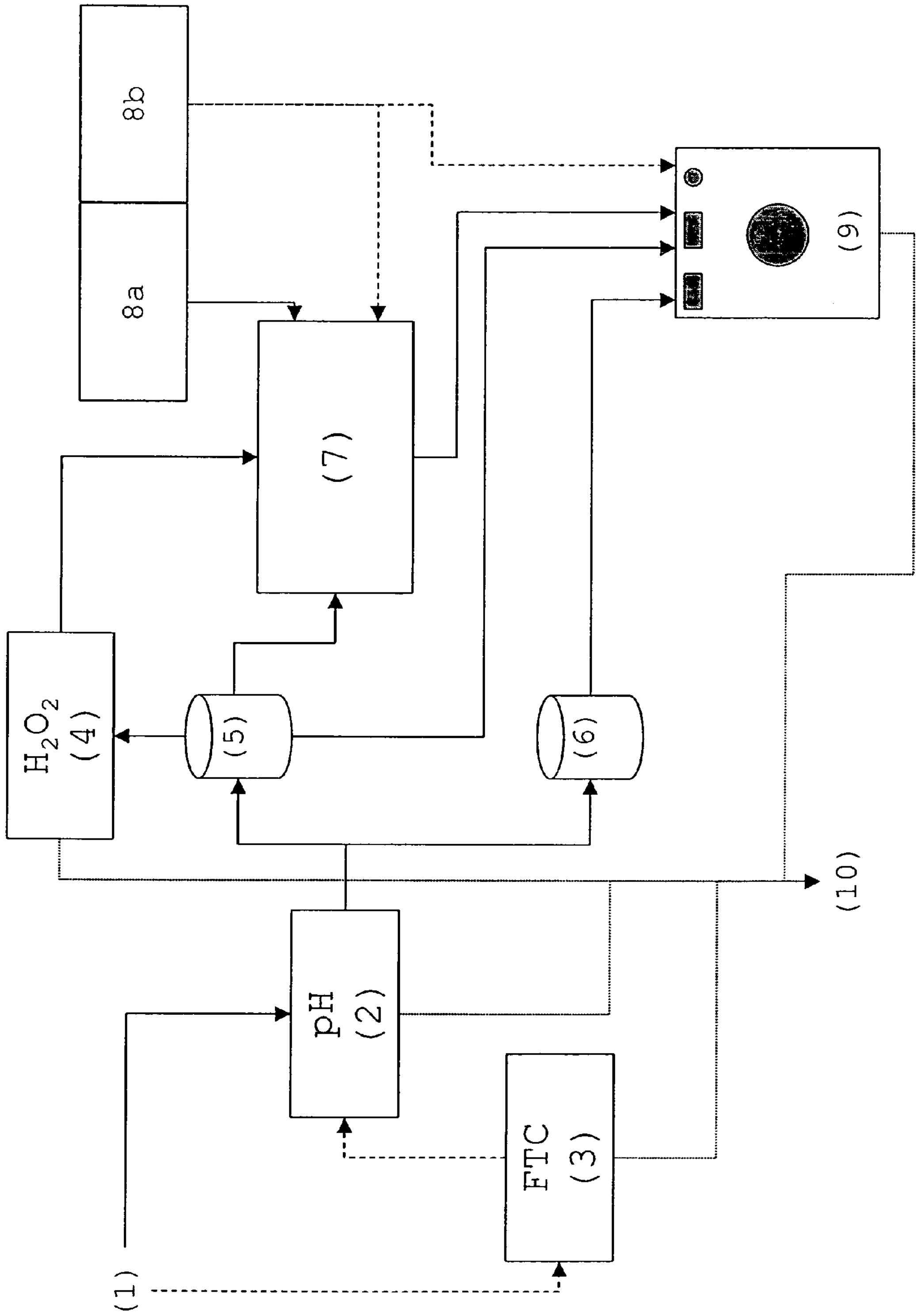


Figure 1/2

Figure 2/2

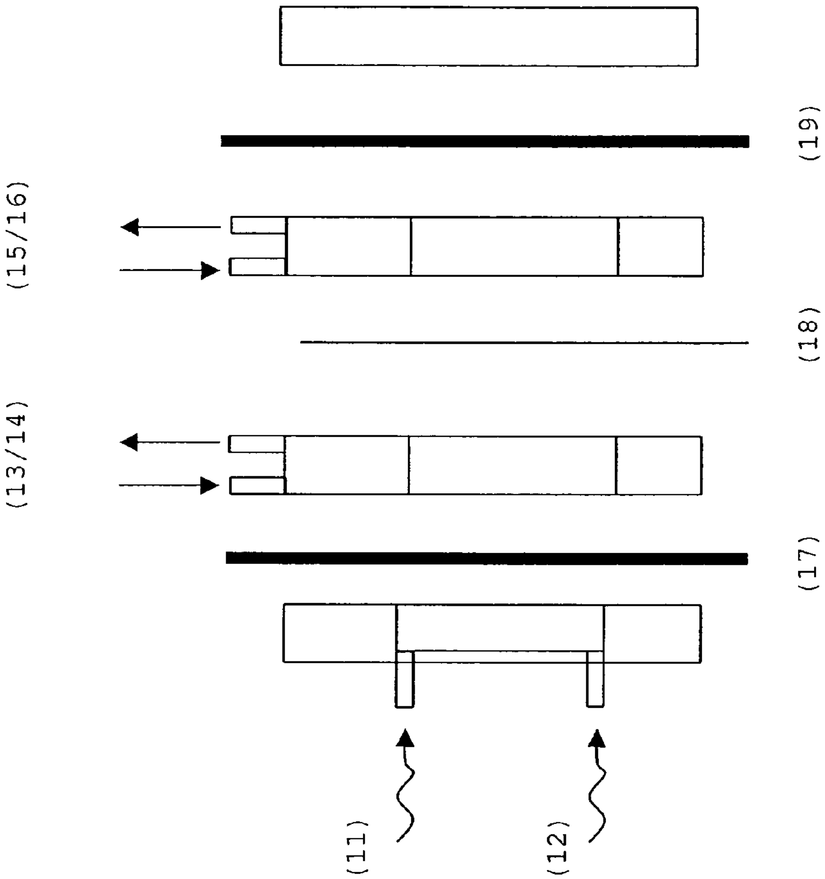


2b

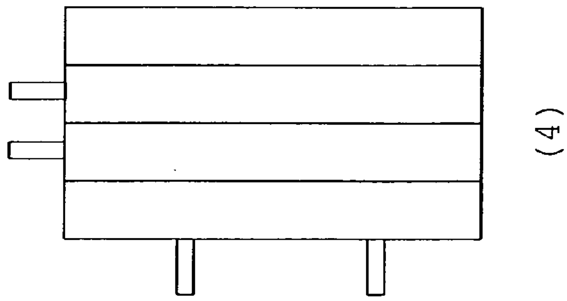


2a

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9630489 A
- US 5066419 A
- US 6387238 B1
- US 5703034 A
- US 20020166177 A1
- US 4319973 A
- EP 05075218 A
- WO 0130229 A
- EP 04076353 A
- WO 0166217 A
- WO 0286195 A
- GB 0836988 A
- GB 0864798 A
- GB 0907356 A
- GB 1003310 A
- GB 1519351 A
- DE 3337921 A
- EP 0185522 A
- EP 0174132 A
- EP 0120591 A
- US 1246339 A
- US 3332 A
- US 882 A
- US 4128494 A
- US 4412 A
- US 934 A
- US 4675393 A
- US 4751015 A
- US 4397757 A
- EP 0284292 A
- EP 0331229 A
- WO 0148298 A
- WO 0060045 A
- WO 0248301 A
- WO 0029537 A
- WO 0012667 A
- US 4144226 A
- US 4146495 A
- EP 0384070 A
- US 3929678 A
- EP 0419036 A